# EUROPÄISCHE PATENTANMELDUNG

(11) **EP 3 651 312 A1**
(43) Veröffentlichungstag der Anmeldung: **13.05.2020**
(21) Anmeldenummer: 18205711.7
(22) Anmeldetag: 12.11.2018
(51) Int. Cl.: H02J 9/06, H05B 37/00, H02J 13/00

(54) **NOTLICHTBAUSTEIN, NOTBELEUCHTUGSANLAGE UND NOTLICHTELEMENT**

(71) Anmelder: polynom ag, 5314 Kleindöttingen (CH)
(72) Erfinder: Noé, Michel, 5314 Kleindöttingen (CH)
(74) Vertreter: Frei Patent Attorneys

(57) **Zusammenfassung**

Ein Notlichtbaustein (1) für eine Notbeleuchtungsanlage weist auf:
• einen Netzanschluss (3) und einen Notlichtbausteinausgang (2) zum Speisen von Notleuchten;
• ein Ladegerät (11);
• Mittel zum Ermitteln eines Netzzustands am Netzanschluss (3);
• einen DC-DC Konverter (8) zum Versorgen des Notlichtbausteinausgangs (2) mit Energie aus einem Akku in einem Notbetrieb;
• Konvertertrennrelais (9a, 9b) zur galvanischen Trennung der Konverterausgangsspannung (13) vom Notlichtbausteinausgang (2);
• Netztrennrelais (10a, 10b) zur galvanischen Trennung des Netzanschlusses (3) vom Notlichtbausteinausgang (2);
• eine elektronische Steuerung (7), welche den Netzzustand überwacht, eine Umschaltung von einem Netz- zu einem Notbetrieb steuert;
• Mittel zum Detektieren eines externen Notzustandes als Folge eines Notbetriebes eines anderen Notlichtbausteins oder als Folge eines Fehlerzustandes einer überwachten Spannung an einem anderen Notlichtbaustein;
Dabei ist der Notlichtbaustein (1) dazu eingerichtet, beim Detektieren des externen Notzustandes eine Einschaltsequenz durch Variation der Ausgangsspannung am Notlichtbausteinausgang (2) zu generieren, und dabei die Einschaltsequenz mittels des DC-DC Konverters (8) zu erzeugen.

## Beschreibung

Die Erfindung bezieht sich auf das Gebiet der Notbeleuchtungsanlagen, insbesondere auf einen Notlichtbaustein, eine Notbeleuchtungsanlage und ein Notlichtelement gemäss dem Oberbegriff der entsprechenden unabhängigen Patentansprüche.

### LPS-Anlagen

Zentrale Sicherheitsstromversorgungssysteme mit Leistungsbegrenzung, sogenannte LPS-Anlagen, sind bekannt. Zentrale Sicherheitsstromversorgungssysteme im Allgemeinen sind in der Norm EN50171 definiert und aufgelistet. Dabei wird ein Notleistungswert von 500W bei dreistündigen bzw. 1500W bei einstündigen Notbetriebsdauer angegeben. Bei Leistungen unterhalb dieses Notleistungswerts werden die zentralen Sicherheitsstromversorgungssysteme als LPS-Systeme oder LPS-Anlagen definiert. Üblicherweise werden solche LPS-Anlagen als Gruppenbatterieanlagen bezeichnet und in Brandschutzabschnitten installiert, um in dem jeweiligen Brandschutzabschnitt vorgesehene Notleuchten im Fall eines Netzausfalles d.h. im Notbetrieb mit Strom zu versorgen.

Die Spannungsausgänge einer LPS-Anlage, welche die Notleuchten mit Strom versorgen, werden Stromkreise genannt. Jeder Notausgangsweg bzw. jeder Raum eines Gebäudes muss aus Sicherheitsgründen durch mindestens zwei Notleuchten, deren Versorgungen aus zwei verschiedenen Stromkreisen einer LPS-Anlage generiert werden, beleuchtet werden.

### Betriebsarten

Bei der Funktionalität der Notbeleuchtungen im normalen Netzbetrieb gibt es zwei Betriebsarten:
- Einen Bereitschaftsschaltungsmodus, in welchem die Notleuchten nur im Notfall eingeschaltet werden bzw. unter normalen Umständen ausgeschaltet bleiben.
- Einen Dauerschaltungsmodus, in welchem die Notleuchten bei normalem Netzzustand als normale Leuchten ein- bzw. ausgeschaltet werden können. Die Notleuchten im eingeschalteten Dauerschaltungsmodus werden vom Netz mit Strom versorgt. Das Ein- bzw. Ausschalten der im Dauerschaltungsmodus arbeitenden Notleuchten kann lokal über einen Netzschalter in der Nähe der Notleuchte (sogenannter lokaler Netzschalter) oder global für alle Notleuchten der gleichen Betriebsart über deren Versorgung aus dem Stromkreis der LPS-Anlage erfolgen.

### Betriebszustände:

Je nach Betriebsart einer Notleuchte können folgende Betriebszustände auftreten:
   - Notleuchten im Bereitschaftsschaltungsmodus;
      ∘ ZB1: Ausgeschaltet durch fehlende Stromkreisversorgung
      ∘ ZB2: Ausgeschaltet mit normaler Netz- bzw. Stromkreisversorgung
      ∘ ZB3: Eingeschaltet mit Versorgung aus dem Akku (d.h. Notbetrieb)
      ∘ ZB4: Eingeschaltet mit Versorgung aus dem Netz
   - Notleuchten im Dauerschaltungsmodus;
      ∘ ZD1: Ausgeschaltet durch fehlende Stromkreisversorgung bei aus- oder eingeschaltetem lokalem Netzschalter
      ∘ ZD2: Ausgeschaltet mit normaler Netz- bzw. Stromkreisversorgung bei ausgeschaltetem lokalem Netzschalter
      ∘ ZD3: Eingeschaltet mit Versorgung aus dem Akku (d.h. Notbetrieb)
      ∘ ZD4: Eingeschaltet mit normaler Netz- bzw. Stromkreisversorgung bei ausgeschaltetem lokalem Netzschalter
      ∘ ZD5: Eingeschaltet mit normaler Netz- bzw. Stromkreisversorgung bei eingeschaltetem lokalem Netzschalter
      ∘ ZD6: Eingeschaltet mit normaler Netz- bzw. Stromkreisversorgung ohne lokalen Netzschalter

### Probleme des Stands der Technik:

**Voluminöse und nicht anpassungsfähige Lösungen:** in nationalen Vorschriften wird die maximale Anzahl der Notleuchten, welche von einem Stromkreis einer LPS-Anlage versorgt werden kann, angegeben (z.B. 20 Notleuchten in Deutschland bzw. 12 in Spanien). Marktüblich werden LPS-Anlagen mit vier Stromkreisen und einer gesamten Leistung zwischen 200W und 300W im Notbetrieb angeboten. Mit der heutigen LED-Technologie der Leuchten bzw. der Notleuchten sind jedoch solche Leistungen als Notbetriebsleistung für einen Brandabschnitt oft zu hoch. Ausserdem werden LPS-Anlagen üblicherweise in voluminösen Metallschränken mit Blei-Akkus eingebaut, welche eine Belüftung und viel Platz benötigen.

**Fragwürdige Redundanz bzw. Sicherheit:** Ein anderes Problem besteht darin, dass jeder Notausgangsweg im Notbetrieb von zwei verschiedenen Stromkreisen beleuchtet werden muss, um eine gewisse Redundanz zu gewährleisten bzw. die Sicherheit im Notfall zu erhöhen. In den Vorschriften werden alle Stromkreise einer LPS-Anlage als redundante Stromquellen betrachtet, obwohl der gleiche Stromwandler und der gleiche Akku bei allen Stromkreisen verwendet werden. Die Redundanz und somit auch die resultierende Sicherheit sind fragwürdig.

**Aufwendige Umschaltverfahren:** Zwischen den oben aufgelisteten Betriebszuständen gibt es folgende Umschaltverfahren:
- Vom normalen Bereitschaftsschaltungs- (ZB1, ZB2 oder ZB4) oder Dauerschaltungsmodus (ZD1, ZD2, ZD4, ZD5 oder ZD6) zum akkuversorgten Notbetrieb (ZB3 bzw. ZD3).
   Problematik: Üblicherweise werden die im Dauerschaltungsmodus arbeitenden Notleuchten im gedimmten Betriebsmodus (d.h. mit niedrigerer Lichtleistung) eingeschaltet, wenn das Netz nicht vorhanden ist, d.h. im akkuversorgten Notbetrieb, da der von den Normen erforderliche Lichtbedarf im Notbetrieb niedrig ist, im Vergleich zu dem normalen Lichtbedarf im Netzbetrieb. Zudem ist es vorteilhaft, die Notleuchten im Notbetrieb im gedimmten Betriebsmodus zu betreiben, da deren Leistungsverbrauch bzw. die Ausnutzung der Kapazität des Akkus dadurch optimiert werden kann. Eine Notleuchte im Dauerschaltungsmodus muss somit automatisch erkennen können, ob sie im normalen Netzbetrieb Licht produziert, d.h. mit derer Nennleistung, oder sie im Notbetrieb arbeitet, d.h. im gedimmten Betrieb bzw. mit einer niedrigeren Leistung.
- Vom Bereitschaftsschaltungs- (ZB1 oder ZB2) zum dauernd eingeschalteten netzversorgten Zustand (ZB4) im Fall eines Notbetriebs bei einem an-deren Stromkreis der gleichen LPS-Anlage.
   Problematik: Wenn ein anderer Stromkreis der gleichen LPS-Anlage im Notbetrieb arbeitet, müssen alle im Bereitschaftsschaltungsmodus funktionierenden Notleuchten aller anderen Stromkreise der gleichen LPS-Anlage eingeschaltet werden bzw. leuchten. Dabei darf die elektrische Leistung für deren Versorgung nicht aus dem Akku entnommen werden.
- Vom lokal ausgeschalteten Dauerschaltungs- (ZD2) zum eingeschalteten netzversorgten Dauerschaltungsmodus (ZD4) im Fall eines Notbetriebs bei einem anderen Stromkreis der gleichen LPS-Anlage.
   Gleiche Problematik wie beim oben erwähnten Umschaltverfahren: Wenn ein anderer Stromkreis der gleichen LPS-Anlage im Notbetrieb arbeitet, müssen alle ausgeschalteten Notleuchten aller anderen Stromkreise der gleichen LPS-Anlage eingeschaltet werden bzw. leuchten. Dabei darf die elektrische Leistung für deren Versorgung nicht aus dem Akku entnommen werden. Es gibt eine zusätzliche Schwierigkeit bei ausgeschalteten Notleuchten im Dauerschaltungsmodus (ZD4), da der lokale Netzschalter meistens manuell betätigt wird und in diesem Fall ausgeschaltet ist.

Um alle diese Zustände zu erkennen bzw. alle Umschaltverfahren automatisch durchzuführen, sind folgende Lösungen bekannt:

### Erster Lösungsansatz gemäss dem Stand der Technik

Gemäss EP0939476 (Inotec) wird eine Versorgungsspannung der einzelnen Notleuchten variiert, um diese zwischen verschiedenen Betriebsmodi umzuschalten. Beim Netzbetrieb im Bereitschaftsschaltungsmodus kann die Versorgungsspannung sinusförmig sein. Beim Netzbetrieb im Dauerschaltungsmodus kann die Versorgungsspannung eine nicht gefilterte gleichgerichtete sinusförmige Gestalt haben. Beim Notbetrieb ist die Versorgungsspannung gleichförmig. Die Form der Versorgungsspannung enthält somit die Information über den Betriebszustand.

Ähnliche Systeme respektive Verfahren sind offenbart in EP0563804A1 (ABB/CEAG), EP0758838 (CEAG) oder EP1732364 (Osram).

Nachteilig bei solchen Lösungen ist, dass die die Versorgungsspannung im Netzbetrieb umgeschaltet werden muss. Dabei sind Leistungen im Netzbetrieb zu berücksichtigen, welche viel höher als Leistungen im Notbetrieb sein können. Typischerweise sind Netzleistungen und somit Ströme im Netzbetrieb zehn Mal höher als im Notbetrieb. Ausserdem ist es aufwendig, den Zustand eines lokalen Netzschalters zu berücksichtigen, besonders wenn dieser Netzschalter manuell betätigt wird. Dadurch werden üblicherweise alle im Dauerschaltungsmodus arbeitenden Notleuchten eines Stromkreises gemeinsam ein- bzw. ausgeschaltet, ohne dabei lokale Schalter berücksichtigen zu können.

### Zweiter Lösungsansatz gemäss dem Stand der Technik

Signale werden zu den Notleuchten übertragen,
- entweder über eine Busverbindung, welche drahtgebunden (beispielsweise mit dem DALI- oder einem anderen Protokoll) oder drahtlos über Funk realisiert sein kann,
- oder ohne separate Busverbindung über die Spannungsversorgung als überlagerte Hochfrequenz-Signale (sogenannte "powerline communication").

Solche Kommunikationsverfahren sind allgemein bekannt in der Beleuchtungsindustrie, und beispielsweise beschrieben in WO2005/032218 (Tridonic), EP0940904A (JSB Electrical PLC) oder EP0433527A (Zumtobel). Das DALI-Busverbindungssystem ist in der Norm IEC62386 bzw. IEC62386-202 für die Notbeleuchtung beschrieben. Gemäss diesem zweiten Ansatz muss eine elektronische Steuerung in den Notleuchten eingebaut werden, welche anhand eines durch die BUS-Verbindung übertragenen Befehls die Leuchte im Notbetrieb in einem gedimmten Zustand versetzt bzw. eine im Dauerschaltungs- (ZD2) oder Bereitschaftsschaltungsmodus (ZB2) funktionierende Notleuchte einschaltet (ZD4 bzw. ZB4). Bei "powerline communication" ist eine dedizierte Hardware zum Aufmodulieren der hochfrequenten Signale auf die Speisespannung erforderlich.

Nachteilig bei solchen Lösungen ist der Realisierungsaufwand. Ausserdem müssen die jeweiligen Busverbindungen bzw. die dazugehörige Software als sicherheitsrelevant betrachtet werden.

Es ist deshalb Aufgabe der Erfindung, einen Notlichtbaustein, eine Notbeleuchtungsanlage und ein Notlichtelement der eingangs genannten Art zu schaffen, welche die oben genannten Nachteile mindestens teilweise behebt.

Diese Aufgabe lösen ein Notlichtbaustein, eine Notbeleuchtungsanlage und ein Notlichtelement mit den Merkmalen der entsprechenden unabhängigen Patentansprüche.

Der Notlichtbaustein weist auf:
- einen Netzanschluss zum Anschliessen an ein Netz zur Versorgung des Notlichtbausteins mit elektrischer Energie, einen Notlichtbausteinausgang zum Speisen von einer oder mehreren Notleuchten und einen Akkuanschluss zum Anschluss eines Akkus;
- ein Ladegerät, zum Laden eines am Akkuanschluss angeschlossenen Akkus in einem Netzbetrieb des Notlichtbausteins;
- Mittel zum Ermitteln eines Netzzustands am Netzanschluss;
- einen DC-DC Konverter zum Wandeln einer am Akkuanschluss anliegenden Akkuspannung in eine gleichförmige Konverterausgangsspannung zum Versorgen des Notlichtbausteinausgangs in einem Notbetrieb, in welchem der Notlichtbaustein nicht durch den Netzanschluss versorgt ist;;
- Konvertertrennrelais zur galvanischen Trennung der Konverterausgangsspannung vom Notlichtbausteinausgang;
- Netztrennrelais zur galvanischen Trennung des Netzanschlusses vom Notlichtbausteinausgang;
- eine elektronische Steuerung, welche den Netzzustand überwacht, eine Umschaltung von einem Netz- zu einem Notbetrieb bzw. vom Not- zum Netzbetrieb steuert, und dazu den Konverter, die Konvertertrennrelais und Netztrennrelais sowie den statischen Schalter steuert, und optional einen Zustand des Notlichtbausteins anzeigt;
- Mittel zum Detektieren eines externen Notzustandes als Folge eines Notbetriebes eines anderen Notlichtbausteins oder als Folge eines Fehlerzustandes einer überwachten Spannung an einem anderen Notlichtbaustein.

Dabei ist der Notlichtbaustein dazu eingerichtet, beim Detektieren des externen Notzustandes eine Einschaltsequenz durch Variation der Ausgangsspannung am Notlichtbausteinausgang zu generieren, und dabei die Einschaltsequenz mittels des DC-DC Konverters zu erzeugen.

Damit kann der Notlichtbaustein durch Detektieren des Unterbruchs des Stromflusses einen Notbetrieb eines zur gleichen LPS-Notbeleuchtungsanlage gehörenden Stromkreises detektieren, und im Bereitschaftsschaltungsmodus arbeitende und vom Notlichtbaustein versorgten Notleuchten in einen dauernd eingeschalteten netzversorgten Zustand umschalten.

Der DC-DC-Konverter weist also einerseits die Funktion auf, im einem Notbetrieb des betrachteten Notlichtbausteins, in welchem er nicht durch den Netzanschluss versorgt ist, den Notlichtbausteinausgang mit einer gleichförmigen Spannung (DC-Spannung) zu versorgen. Andererseits weist er die Funktion auf, beim Detektieren eines Notbetriebs oder einer fehlenden Spannung bei einem *anderen* Notlichtbaustein - was im betrachteten Notlichtbaustein als "externer Notzustand" bezeichnet wird - die Einschaltsequenz zu erzeugen. Vor und nach dem Erzeugen der Einschaltsequenz speist er den Notlichtbausteinausgang mit der Netzspannung des Netzanschlusses. Diese Netzspannung ist typischerweise eine Wechselspannung, je nach Versorgungsnetz mit einer Frequenz von 50 Hz oder 60 Hz und einer Spannung zwischen 110 V und 130 V oder zwischen 220 V und 240 V.

Optional kann der Notlichtbaustein einen statischen Schalter aufweisen, insbesondere einen unidirektionellen Schalter, zum Ein- und Ausschalten einer Versorgung des Notlichtbausteinausgangs mit einem Ausgangsstrom des Konverters.

Entsprechend konfigurierte Notlichtelemente sind dazu eingerichtet, netzversorgt zu bleiben, und durch Empfang der Einschaltsequenz eine zugeordnete Notleuchte einzuschalten, ungeachtet dessen, ob ein lokaler Schalter ein- oder ausgeschaltet ist.

In Ausführungsformen ist der Notlichtbaustein dazu eingerichtet, in einem netzversorgten Zustand
- den Notlichtbausteinausgang durch den Netzanschluss zu speisen;
- beim Detektieren des externen Notzustandes die Einschaltsequenz am Notlichtbausteinausgang zu generieren; und anschliessend; den Notlichtbausteinausgang wieder durch den Netzanschluss zu speisen.

Damit ist es möglich, ein Notlichtelemente respektive deren Notleuchte im Dauerschaltungsmodus zu betreiben und dazu mit Netzspannung zu versorgen, und gleichwohl eine Information zum Einschalten der zu übertragen.

In Ausführungsformen weisen die Mittel zum Detektieren des externen Notzustandes auf: eine elektronische Schaltung zur Versorgung und Überwachung eines kritischen Kreises, mit einer Quelle zum Anlegen einer Spannung zwischen zwei Klemmen eines Überwachungsanschlussses, einem Überwachungsschalter zum Unterbrechen eines Stromflusses zwischen diesen Klemmen, insbesondere beim Notbetrieb des Notlichtbausteins, und einer Überwachungskreismessung zum Überwachen eines Stromflusses zwischen diesen Klemmen und zum Detektieren eines Unterbruchs dieses Stromflusses, und damit zum Detektieren des externen Notzustandes.

Damit kann durch Zusammenschalten von mehreren Notlichtbausteinen ein kritischer Kreis realisiert werden.

In Ausführungsformen weisen die Mittel zum Detektieren des externen Notzustandes auf: Spannungsüberwachungen zum Überwachen von anderen Spannungen, insbesondere von anderen Netzspannungen oder Netzspannungsphasen als der Netzspannung am Netzanschluss des Notlichtbausteins.

Damit ist eine weitere Möglichkeit zum Erkennen von Notzuständen realisiert.

In Ausführungsformen ist der Notlichtbaustein dazu eingerichtet, die Einschaltsequenz als ein von der Netzspannung verschiedenes und von der Konverterausgangsspannung zum Versorgen des Notlichtbausteinausgangs in einem Notbetrieb verschiedenes Spannungssignal zu erzeugen.

Damit ist ein durch das Notlichtelement einfach erkennbares Signal realisierbar. Die folgenden Ausführungsformen zeigen verschiedene Alternativen von solchen Signalen.

In Ausführungsformen ist der Notlichtbaustein dazu eingerichtet, die Einschaltsequenz als eine über einen zeitlichen Abschnitt vorliegende Gleichspannung zu erzeugen, wobei insbesondere deren Spannungswert sich vom Wert der Ausgangsspannung am Notlichtbausteinausgang im Notbetrieb unterscheidet.

In Ausführungsformen ist der Notlichtbaustein dazu eingerichtet, die Einschaltsequenz als eine Reihenfolge von zwei oder mehreren zeitlichen Abschnitten mit Gleichspannungen mit unterschiedlichen Werten zu erzeugen.

In Ausführungsformen ist der Notlichtbaustein dazu eingerichtet, die Einschaltsequenz während einer Zeit von weniger als zwei Sekunden, insbesondere weniger als einer Sekunde zu erzeugen.

In Ausführungsformen liegen die Gleichspannung respektive Gleichspannungen der Einschaltsequenz zwischen 200 V und 240 V DC.

In Ausführungsformen ist der Notlichtbaustein dazu eingerichtet, die Einschaltsequenz als eine hochfrequente AC-Spannung, mit einer Frequenz höher als die Netzfrequenz, beispielsweise höher als 500 Hz, höher als 1 kHz, höher als 2 kHz oder höher als 10 kHz zu erzeugen.

In analoger Weise können der Notlichtbaustein und die Notlichtelemente dazu eingerichtet sein, eine Ausschaltsequenz zu erzeugen respektive zu empfangen. Damit können, nach Beendung des externen Notzustandes, die Notlichtelemente in einen ursprünglichen Betriebszustand umgeschaltet werden, in welchem der lokale Schalter zum Ein- respektive Ausschalten der Notleuchte berücksichtigt wird.

In Ausführungsformen ist der Notlichtbaustein dazu eingerichtet, in einem netzversorgten Zustand
- den Notlichtbausteinausgang durch den Netzanschluss zu speisen;
- beim Wegfallen des externen Notzustandes eine **Ausschaltsequenz** am Notlichtbausteinausgang zu generieren; und anschliessend;
- den Notlichtbausteinausgang wieder durch den Netzanschluss zu speisen.

Eine Ausschaltsequenz kann die gleichen Charakteristiken bezüglich Dauer, Anzahl und Höhe von Spannungswerten wie eine Einschaltsequenz aufweisen. Jedoch kann sie eine andere Folge von Spannungswerten aufweisen, um von einer Einschaltsequenz unterscheidbar zu sein. In Ausführungsformen enthält die Ausschaltsequenz nur einen Spannungswert, insbesondere den Spannungswert, der im Notbetrieb ausgegeben wird.

Einschaltsequenzen und Ausschaltsequenzen werden zusammengefasst als Steuersequenzen bezeichnet.

Die beschriebene Ansteuerung des Notlichtelements erfordert keinen zusätzlichen Kommunikationsbus, keine Mittel zum Verändern der Netzspannung (wie beispielsweise durch gleichrichten), und keine Mittel zum Aufmodulieren von Signalen auf die Netzspannung. Es wird lediglich der DC-DC Konverter verwendet, der auch im normalen Notbetrieb benutzt wird, um die angeschlossenen Notleuchten aus dem Akku zu speisen. Voraussetzung ist lediglich, dass der DC-DC Konverter ausreichend schnell schalten kann, um die Steuersequenzen zu erzeugen. Umgekehrt können bei einem gegebenen DC-DC Konverter die Steuersequenzen so definiert werden, dass sie mit diesem DC-DC Konverter erzeugt werden können.

In einem Verfahren zum Betrieb des Notlichtbausteins wird beim Detektieren des externen Notzustandes eine Einschaltsequenz durch Variation der Ausgangsspannung am Notlichtbausteinausgang generiert, wobei die fünschaltsequenz mit dem DC-DC Konverter erzeugt wird. In Ausführungsformen kann dies geschehen, indem ausgehend von einem Zustand, in welchem der Notlichtbausteinausgang durch den Netzanschluss gespeist ist, beim Detektieren des externen Notzustandes die Einschaltsequenz am Notlichtbausteinausgang durch den Konverter generiert wird; und anschliessend der Notlichtbausteinausgang wieder durch den Netzanschluss gespeist wird.

Der statische Schalter respektive Halbleiterschalter ist zum Trennen einer Verbindung zwischen einem Konverterausgang und einer Klemme des Notlichtbausteinausgangs angeordnet. Er kann vor oder nach dem Konvertertrennrelais angeordnet sein.

Die Einschaltsequenz kann mittels des statischen Schalters im Zusammenspiel mit dem DC-DC Konverter erzeugt werden, indem der statische Schalter die vom DC-DC Konverter erzeugte Spannung an den Notlichtbausteinausgang schaltet respektive von diesem abtrennt.

In Ausführungsformen ist beim Erzeugen der Einschaltsequenz der DC-DC Konverter über die Akkuanschlussklemmen gespeist.

In Ausführungsform weist der Notlichtbaustein nur ein Konvertertrennrelais zur galvanischen Trennung der Konverterausgangsspannung vom Notlichtbausteinausgang auf. In Ausführungsformen weist der Notlichtbaustein nur ein Netztrennrelais zur galvanischen Trennung des Netzanschlusses vom Notlichtbausteinausgang auf. In beiden Fällen kann durch Verwendung von Relais mit höherer Spannungsfestigkeit - beispielsweise mit einer Isolationsspannung von mehr als 2 kV - die Verwendung einer Serieschaltung von Relais mit geringerer Spannungsfestigkeit vermieden werden.

Mit dem beschriebenen Notlichtbaustein wird es möglich, eine Notbeleuchtungsanlage, insbesondere eine LPS-Anlage, modular aufzubauen. Jeweils ein Notlichtbaustein kann in einen Stromkreis der Notbeleuchtungsanlage eingebaut werden. Somit kann jeder Stromkreis aus einem solchen Notlichtbaustein und einem Akku bestehen.

Die **Notbeleuchtungsanlage** weist zwei oder mehr Notlichtbausteine auf, wobei die Überwachungsanschlüsse der Notlichtbausteine miteinander verbunden sind und eine geschlossene Schleife bilden.

Diese Schleife bildet den kritischen Kreis. Die Schleife führt den Strom, der in jedem der beteiligten Notlichtbausteine überwacht wird und unterbrochen werden kann.

Die Notbetriebsleistung einer solchen Notbeleuchtungsanlage respektive LPS-Anlage kann stufenweise ausgelegt werden, indem die Anzahl ihrer Stromkreise bzw. der Notlichtbausteine entsprechend gewählt wird. Dadurch ist es möglich, die Notbetriebsleistung der Notbeleuchtungsanlage genau den Bedürfnissen anzupassen.

Beispielsweise werden die einzelnen Notlichtbausteine jeweils mit einer Notbetriebsleistung von 50W realisiert. Damit weist eine 500W LPS-Anlage zehn Notlichtbausteine und zehn dazu passende Akkus auf.

Beispielsweise werden LFP-Akkus (d.h. Akkus mit Lithium-Eisenphosphat Technologie bzw. mit LiFePO4-Zellen) verwendet, um eine Modularität auch bei den Akkus zu gewährleisten.

Dadurch kann jeder Stromkreis und die ganze Notbeleuchtungsanlage mit Modulen, also Notlichtbausteinen und Akku-Modulen, gebaut werden. Dies können in einem brandsicheren elektrischen Schrank eingebaut werden. Dessen Grösse kann der Anzahl von Stromkreisen angepasst werden. Der Einbau der Module in herkömmliche elektrische Schränke mit brandsicheren Trennungen kann je nach örtlichen Bestimmungen auch zulässig sein.

Jeder Notlichtbaustein kann mit einem oder mehreren Akkus ausgerüstet sein. Somit sind alle Stromkreise einer LPS-Anlage, welche aus mehreren Notlichtbausteinen besteht, unabhängig voneinander. Dadurch kann eine Beleuchtung in einem bestimmten räumlichen Bereich, beispielsweise eines Notausgangs, redundant mit mindestens zwei (Not)leuchten realisiert werden, indem die Versorgung der (Not)leuchten aus zwei verschiedenen Stromkreisen bzw. aus zwei verschiedenen Notlichtbausteinen erfolgt.

Eine solche Lösung ähnelt in gewisser Weise einer Einzelbatterien-Notbeleuchtung, bei welcher Akkus in jede einzelne Notleuchte eingebaut werden. Solche Einzelbatterien-Notbeleuchtungen sind jedoch für die Versorgung von nur einer einzelnen Notleuchte zulässig. Die Anwendung für die Versorgung mehrerer Notleuchten ist damit hingegen nicht zulässig. Gemäss der Erfindung können somit technische Vorschriften, welche für zentrale Sicherheitsstromversorgungssysteme bzw. für LPS-Anlagen gelten, erfüllt werden, insbesondere bezüglich der Umschaltverfahren zwischen den oben beschriebenen Betriebsarten.

In einem Verfahren zum Herstellen einer Notbeleuchtungsanlage werden die folgenden Schritte durchgeführt: ausgehend von einer geforderten Leistung eines Stromkreises, Bestimmen einer Anzahl von Notlichtbausteinen, und Zusammenschalten dieser Anzahl von Notlichtbausteinen zur redundanten Speisung von Notleuchten des Stromkreises.

### Ausgangsspannungsgestaltung und Umschaltverfahren:

Wie eingangs aufgelistet, gibt es bei den vom Notlichtbaustein versorgten Notleuchten verschiedene Betriebsarten bzw. -zustände. Solche Betriebsarten bzw. - zustände können mit den Notlichtbausteinen realisiert werden, insbesondere wenn lokale Notlichtelemente, welche auf die Notlichtbausteine abgestimmt sind, in den Notleuchten eingebaut sind.

Mittels der Gestaltung der Ausgangsspannung können folgende Betriebszustände unter folgenden Bedingungen hervorgerufen werden:
- Im Netzbetrieb ist es möglich, die im Dauerschaltungsmodus arbeitenden Notleuchten mit dem Einschalten der Netzspannung (230V AC) bzw. mit deren Abschaltung (0V) global ein- bzw. auszuschalten, und dadurch die Zustände (ZD6) bzw. (ZD1) einfach durch die Ausgangsspannungsgestaltung zu steuern. Alle im Dauerschaltungsmodus arbeitenden Notleuchten können dadurch gemeinsam ein- und ausgeschaltet werden. Wenn eine einzige solche Notleuchte jedoch lokal gesteuert werden muss, dann ist es erforderlich, die Ausgangsspannung ständig mit der Netzspannung zu verbinden bzw. dauerhaft auf ca. 230V AC zu halten. In diesem Fall werden alle im Dauerschaltungsmodus arbeitenden Notleuchten ohne lokalen Netzschalter im eingeschaltetem Zustand (ZD6) funktionieren.
- Im Notbetrieb wird die Ausgangsspannung als Gleichspannung gestaltet und dadurch die Betriebszustände (ZB3) und (ZD3) generiert.

Eine Gleichspannung wird auch als konstante Spannung oder DC-Spannung bezeichnet. Eine Wechselspannung wird als AC-Spannung bezeichnet.

Um die anderen Betriebszustände unter anderen Bedingungen zu generieren bzw. abzudecken, können bestimmte Umschaltverfahren vom ME-SAT Notlichtbaustein ausgeführt werden. Bei solchen Umschaltverfahren wird eine Form der

Ausgangsspannung transitorisch verändert. Sie kann dadurch verschiedene Formen annehmen, beispielsweise:
- eine netzfrequente AC-Spannung, insbesondere indem der Netzanschluss an den Notlichtbausteinausgang geschaltet ist;
- eine über einen zeitlichen Abschnitt vorliegende gleichförmige oder DC-Spannung;
- eine Folge von zeitlichen Abschnitten mit Gleichspannungen unterschiedlicher Spannungshöhe;
- eine hochfrequente AC-Spannung, d.h. mit einer Frequenz höher als die Netzfrequenz, insbesondere mindestens zwanzigmal höher, beispielsweise höher als 1 kHz.

Solche Formen der Ausgangsspannung können jeweils während einer kurzen Zeit erzeugt werden, beispielsweise während weniger als 5, 3, 2 oder einer Sekunde.

In jedem Notlichtbaustein kann ein statischer, d.h. elektronischer oder "solid state" Schalter, auch Halbleiterschalter genannt, vorliegen, mit welchem schnelle Umschaltverfahren gestaltet werden können, und dadurch das aufwendige Umschaltverfahren vom Bereitschafts- (ZB1 oder ZB2) zum dauernd eingeschalteten netzversorgten Zustand (ZB4) einfach implementiert werden kann. Das gleiche gilt für das Umschaltverfahren vom lokal ausgeschalteten Dauerschaltungs- (ZD2) zum eingeschalteten Dauerschaltungsmodus (ZD4). Ausserdem kann mit dem statischen Schalter die Umschaltung zum Notbetrieb schnell und einfach erfolgen.

In Ausführungsformen kann in jeder von einem Notlichtbaustein versorgten Notleuchte ein lokales Notlichtelement vorliegen, welches die Einschaltsequenz dekodieren und entsprechende Umschaltungen zwischen Betriebsmodi durchführen kann.

Das **Notlichtelement** dient zum Speisen einer Notleuchte. Es weist auf: einen Eingangsanschluss zur Versorgung des Notlichtelements, insbesondere durch

Anschliessen an einen Notlichtbausteinausgang eines Notlichtbausteins, und einen Leuchtmittelanschluss zum Speisen eines Leuchtmittels.

Das Notlichtelement ist dazu eingerichtet, beim Anliegen einer Gleichspannung am Eingangsanschluss das Leuchtmittel in einem Notbetrieb mit einer Notbetriebsleistung zu speisen; und
beim Detektieren einer am Eingangsanschluss anliegenden Einschaltsequenz und bei einer anschliessend am Eingangsanschluss liegenden Netzspannung, eine Umschaltung des Notlichtelements
- zu einem Zustand, in welchem der Leuchtmittelanschluss zum Speisen des Leuchtmittels mit einer Nennleistung gespeist ist und dabei von der am Eingangsanschluss anliegenden Netzspannung versorgt ist,
vorzunehmen.

Durch das Speisen des Leuchtmittels ist das Leuchtmittel eingeschaltet. Insbesondere kann zum Speisen des Leuchtmittels bei Versorgung aus dem Netz eine am Eingangsanschluss anliegende Netzspannung an den Leuchtmittelanschluss geschaltet werden.

In Ausführungsformen ist das Notlichtelement dazu eingerichtet, beim Anliegen einer am Eingangsanschluss anliegenden Gleichspannung den Leuchtmittelanschluss zum Speisen eines Leuchtmittels mit dieser Gleichspannung zu versorgen. Insbesondere kann dabei die Gleichspannung an den Leuchtmittelanschluss geschaltet werden.

In Ausführungsformen ist das Notlichtelement an einen lokalen Schalter anschliessbar oder weist einen lokalen Schalter auf oder ist durch einen lokalen Schalter ansteuerbar, und ist dazu eingerichtet, beim Anliegen einer Netzspannung am Eingangsanschluss das Leuchtmittel entsprechend einer Stellung des lokalen Schalters zu speisen respektive einzuschalten, oder nicht zu speisen respektive auszuschalten. Im eingeschalteten Zustand ist das Leuchtmittel mit einer Nennleistung gespeist.

In Ausführungsformen ist das Notlichtelement dazu eingerichtet, beim Detektieren der Einschaltsequenz die genannte Umschaltung der Notleuchte vorzunehmen,
- falls die Notleuchte durch einen lokalen Schalter ein- und ausschaltbar ist, und in einem vom lokalen Schalter hervorgerufenen ausgeschalteten Zustand ist.

Das Notlichtelement ist also dazu eingerichtet, eine für den Dauerschaltungsmodus vorgesehene Notleuchte einzuschalten, ungeachtet des Zustandes des lokalen Schalters, also ungeachtet dessen, ob die Notleuchte durch den lokalen Schalter bereits eingeschaltet ist oder nicht. Der Zustand nach diesem Einschalten kann eingeschalteter netzversorgter Dauerschaltungsmodus genannt werden.

In Ausführungsformen kann die Notleuchte nicht anschliessend an dieses Einschalten manuell durch Betätigen des lokalen Schalters wieder ausgeschaltet werden. Die Berücksichtigung des Zustandes des lokalen Schalters geschieht erst nach Empfang einer Ausschaltsequenz.

In Ausführungsformen ist das Notlichtelement dazu eingerichtet, die Einschaltsequenz, wie sie von einem Notlichtbaustein erzeugt wurde, zu detektieren, insbesondere
- als ein von der Netzspannung verschiedenes und von der Konverterausgangsspannung zum Versorgen des Notlichtbausteinausgangs in einem Notbetrieb verschiedenes Spannungssignal zu detektieren, insbesondere
- als eine über einen zeitlichen Abschnitt vorliegende Gleichspannung zu detektieren, wobei insbesondere deren Spannungswert sich vom Wert der Ausgangsspannung am Notlichtbausteinausgang im Notbetrieb unterscheidet,
- oder als eine Reihenfolge von zwei oder mehreren zeitlichen Abschnitten mit Gleichspannungen mit unterschiedlichen Werten zu delektieren.

Für alle Ausführungsformen kann gelten: Im Notbetrieb ist das Leuchtmittel mit einer Notbetriebsleistung gespeist. Bei Notleuchten, welche auch einen Netzbetrieb zulassen, ist die Notbetriebsleistung typischerweise weniger als ein Fünftel oder weniger als ein Siebtel oder weniger als ein Zehntel der Nennleistung im Netzbetrieb.

Weitere bevorzugte Ausführungsformen gehen aus den abhängigen Patentansprüchen hervor.

Im folgenden wird der Erfindungsgegenstand anhand eines bevorzugten Ausführungsbeispiels, welches in den beiliegenden Zeichnungen dargestellt ist, näher erläutert. Es zeigen:
Figur 1 eine schematischen Aufbau eines Notlichtbausteins;
Figur 2 Steuersignale; und
Figur 3 einen schematischen Aufbau eines Notlichtelements.

### Beschreibung eines Notlichtbausteins 1:

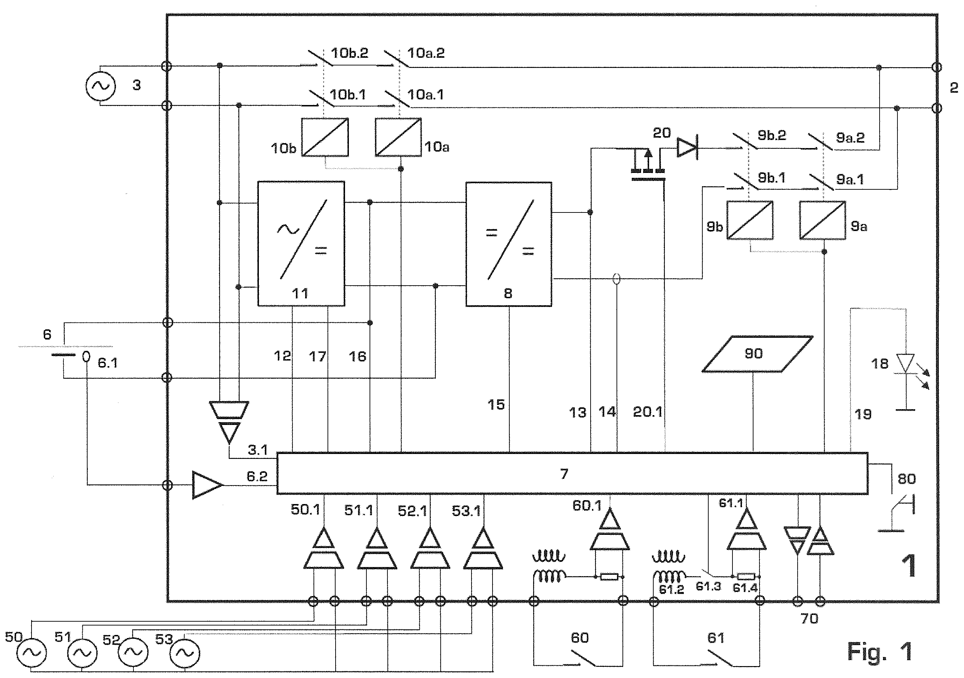

Fig.1 zeigt wesentliche funktionale Einheiten eines Notlichtbausteins 1, hier auch "ME-SAT Notlichtbaustein" genannt. Für weitere Funktionen wie Sicherheit, Entstörung, etc. nötige Komponenten wurden aus Einfachheits-gründen weggelassen. Der Notlichtbaustein 1 weist unter anderem einen Netzanschluss 3 mit zwei Netzanschlussklemmen, einen Notlichtbausteinausgang 2 mit zwei Ausgangsklemmen und einen Akkuanschluss mit zwei Akkuanschlussklemmen auf.

Der Notlichtbaustein 1 weist die folgenden Komponenten auf:
- **Ladegerät 11:** Dieses Ladegerät kann ein herkömmliches Ladegerät, sein, welches einen Akku 6 nach einem Netzausfall wieder mit Energie aus dem Netz 3 lädt. Vorzugsweise wird dieses Ladegerät 11 als getaktetes Netzteil gebaut, um die Abmessungen zu reduzieren bzw. den Wirkungsgrad zu erhöhen. Für niedrigen Leistungen wie bei einer Akku-Ladung sind Eintakt-sperrwandler gut geeignet. Mit dem Ladegerät 11 wird auch das Netz 3 überwacht. Ein Netzzustandssignal 12 wird generiert, welches den Netzzustand nachbildet. Alternativ kann das Netz mittels einer separaten Netzüberwachungsschaltung 3.1, welche auch eine Isolation bezüglich des Netzes aufweist, überwacht werden.
- **Konverter 8:** Dieser Konverter arbeitet als DC-DC-Stromwandler, vorzugsweise als Eintakt-Sperrwandler. Im Fall eines Netzausfalls, welcher mit der Überwachung des Netzzustandssignals 12 oder mit der Netzüberwachungsschaltung 3.1 detektiert werden kann, wird durch diesen Konverter 8 die Akku-Spannung in eine geregelte gleichförmige Konverterausgangsspannung 13 an einem Konverterausgang umgewandelt. Es ist auch möglich, diese Gleichspannung 13 dauernd zu erzeugen, da diese Spannung von einer Ausgangsspannung des Notlichtbausteins 1, welche an einem Notlichtbausteinausgang 2 anliegt, mit statischen und/oder elektromechanischen Schaltern 20 bzw. 9b und 9a getrennt ist. Dadurch ist es möglich, Filter-Kondensatoren der Konverterausgangsspannung 13 ständig im Ladezustand zu halten, und somit die Umschaltzeit vom Netz- zum Notbetrieb zu reduzieren. Solche Filter-Kondensatoren können Teil des Konverters 8 sein.
- **Statischer Schalter 20 und elektromechanisches Relais 9a/9b:** Mit diesem Schalter bzw. diesen Relais kann die gleichförmige Konverterausgangsspannung 13 vom Notlichtbausteinausgang 2 respektive. der Ausgangsspannung getrennt bzw. mit diesen verbunden werden.
   Mit den elektromechanischen Relais 9a und 9b, auch Konvertertrennrelais genannt, kann die erforderliche Isolierung zwischen Akku- und Ausgangsspannung realisiert werden. Unter Umständen kann eine solche galvanische Trennung auch mit nur einem Relais normgerecht ausgeführt werden.
   Mit dem statischen Schalter 20 kann eine sehr schnelle Veränderung der Ausgangsspannung am Notlichtbausteinausgang 2 durch die Regelung der Konverterausgangsspannung 13 erfolgen. Dieser statische Schalter 20 kann als unidirektioneller Schalter realisiert werden. Er ist beispielhaft als P-MOSFET und Diode dargestellt.
   Vorzugsweise schalten die elektromechanischen Relais 9a und 9b im stromlosen Zustand, indem ihre Ansteuerung beim Abschalten vor der Abschaltung des statischen Schalters 20 bzw. beim Einschalten vor der Einschaltung des statischen Schalters 20 erfolgt. Dadurch können kleinere und somit schnellere Relais 9a und 9b verwendet werden.
- **Relais 10a und 10b:** Mit den elektromechanischen Netztrennrelais 10a und 10b kann eine erforderliche Isolierung respektive. Abtrennung zwischen Netz- und Sicherheitsspannung realisiert werden. Unter Umständen kann eine solche galvanische Trennung auch mit nur einem Relais normgerecht ausgeführt werden.
   ∘ Um die Betriebszustände ZB3 und ZD3 in den vom Notlichtbaustein versorgten Notleuchten zu ermöglichen bzw. hervorzurufen, d.h. im Notbetrieb, sind die Netztrennrelais 10a und 10b abgeschaltet, also offen.
   ∘ Um die Betriebszustände ZD2, ZD4, ZD5 und ZD6 in den vom Notlichtbaustein versorgten Notleuchten zu ermöglichen bzw. hervorzurufen, sind die Netztrennrelais 10a und 10b eingeschaltet und dadurch die Ausgangsspannung am Notlichtbausteinausgang 2 sinusförmig. Deren Wert beträgt ungefähr den Netzspannungswert.
   ∘ Um den Betriebszustand ZD1 in den vom Notlichtbaustein versorgten Notleuchten zu ermöglichen bzw. hervorzurufen, sind die Netztrennrelais 10a und 10b abgeschaltet und dadurch beträgt die Ausgangsspannung am Notlichtbausteinausgang 2 0V.
- **Steuerung 7:** Die elektronische Steuerung kann durch einem Mikrokontroller realisiert sein. Ihre Aufgaben werden im folgenden Abschnitt detailliert beschrieben:

### Aufgaben und Funktionen der Steuerung 7 des Notlichtbausteins 1:

Folgenden Aufgaben werden von der Steuerung 7 gesteuert bzw. können gesteuert werden:

Netzüberwachung: Die Netzüberwachungsschaltung 3.1 oder das Signal 12, welches das Netz nachbildet, wird vom Mikrokontroller 7 bewertet bzw. gemessen und mit einem minimalen Wert verglichen. Wenn das Signal diesen Wert unterschreitet, wird das Netz als fehlerhaft erkannt und infolgedessen der Notbetrieb aktiviert.

Relais 9a/9b und 10a/10b und statischer Schalter 20 Steuerungen: Die Umschaltung vom Netz- zum Notbetrieb bzw. vom Not- zum Netzbetrieb sowie die Umschaltung vom Bereitschaftsschaltungs- zum netzversorgten Dauerschaltungs-modus erfolgen über diese Steuerungen, wie unten beschrieben.

Überwachung des Ausgangsstroms 14 im Notbetrieb: Im Notbetrieb wird der Ausgangsstrom 14 des Konverters 8 vom Mikrokontroller gemessen, um den Zustand der von der Ausgangsspannung versorgten Notleuchten zu ermitteln und um den Konverter 8 zu schützen. Die Strombegrenzung des Ausgangsstroms 14 kann durch die Steuerung 7 oder durch eine Schutzschaltung im Konverter 8 realisiert werden.

Steuerung 15 des Konverters 8: Es ist möglich, Steuerungssignale für den Konverter 8 direkt durch den Mikrokontroller 7 zu erzeugen. Beispielsweise dann, wenn der Konverter 8 als Eintakt-Sperrwandler Flyback converter (Hoch-Tiefsetzsteller) arbeitet. Typischerweise weist ein solcher einen (einzigen) Halbleiterschalter, insbesondere einen Transistor auf. Mit einem im Mikrokontroller 7 intern generierten PWM-Signal 15 pulsbreitenmodulierten Signal kann der Schalter des Konverters 8 gesteuert werden.

Überwachung des Akkus 6: Die Akku-Spannung 16 wird vom Mikrokontroller 7 gemessen bzw. überwacht. Mit der Überwachung kann geprüft werden, ob der Akku 6 im Netzbetrieb richtig geladen wird. Im Notbetrieb, d.h. während einer Akkuentladung, kann der Akku 6 gegen Tiefentladung geschützt werden. D.h., dass der Notbetrieb unter einer gewissen Akku-Spannung z.B. 2.5V pro Zelle bei LFP-Zellen unterbrochen und der aus dem Akku 6 entzogene Strom auf einem minimalen Wert reduziert wird, üblicherweise im Microampere-Bereich. Es ist auch möglich, mit dieser Akku-Spannungsmessung das Ladeverfahren des Akkus 6 zu steuern. Dies erfolgt über ein Signal 17, welches das Ladegerät 11 steuern kann.

Umgebungstemperaturmessung 6.1 des Akkus 6: Über eine Schnittstelle 6.2, welche als digitale oder als analoge Schaltung gebaut werden kann, wird die Umgebungstemperatur des Akkus 6 vom Mikrokontroller 7 gemessen und dadurch bei jedem Selbsttest-Verfahren aufgenommen und gespeichert.

Notlichtbausteinzustandsanzeige 18: Mit dem Mikrokontroller 7 kann auch die Zustandsanzeige des Notlichtbausteins gesteuert werden. Auf der Zeichnung 1 ist eine einfache Status-LED 18 skizziert, welche über ein Signal 19 versorgt wird. Es ist natürlich möglich, andere optische Anzeigen 90 oder akustische Warnungen mit dem Mikrokontroller 7 zu steuern.

Spannungsüberwachungen 50.1/51.1/52.1/53.1: Mit den Spannungsüberwachungen und der elektronischen Steuerung 7 können auch verschiedene Spannungen 50, 51, 52 und 53 über galvanisch getrennte Schnittstellen überwacht werden. Jede der Spannungsüberwachungen kann einen Spannungsüberwachungsanschluss mit zwei Spannungsüberwachungsklemmen und eine Spannungsüberwachungseinheit aufweisen. Letztere kann zur galvanischen Trennung und Aufbereitung einer Spannung am Spannungsüberwachungsanschluss dienen, womit die Spannungsüberwachungseinheit oder die Steuerung 7 einen Fehlerzustand in der überwachten Spannung detektieren kann. Damit können beispielsweise die anderen Phasen der Versorgungsspannung 3 oder eine Phase, welche über Brandmelder oder andere Sicherheitskomponente abgeschaltet wird, überwacht werden. Je nach örtlichen gültigen Vorschriften können solche Überwachungen erforderlich sein, um in den Notbetrieb umzuschalten. Beispielsweise sind diese Spannungsüberwachungen über DIP-Schalter einzeln aktivierbar.

Mit einer von diesen Spannungsüberwachungen kann auch eine so genannte geschaltete Phase überwacht werden. Diese geschaltete Phase wird üblicherweise überwacht, um alle im Dauerschaltungszustand arbeitenden Notleuchten gemeinsam über die Ausgangsspannung am Notlichtbausteinausgang 2 ein- bzw. auszuschalten, wenn die geschaltete Phase ein- bzw. ausgeschaltet wird, d.h. die versorgten Notleuchten in den Betriebszuständen ZD6 bzw. ZD1 umzuschalten.

Überwachung 60.1 eines Fernschalters 60 für die manuelle Abschaltung des Notbetriebs in betrieblich verdunkelten Räumen, im sogenannten Kinomodus. Beispielsweise ist dies Funktionsmöglichkeit über DIP-Schalter aktivierbar.

Überwachung 61.1 des Zustands eines kritischen Kreises 61: Je nach örtlichen gültigen Vorschriften für zentrale Notlichtanlagen müssen Notleuchten, welche im Bereitschaftsschaltungs- oder im ausgeschalteten Dauerschaltungsmodus sind, eingeschaltet werden. Mit der Bildung und der Versorgung eines sogenannten kritischen Kreises, welche die Notlichtbausteine einer LPS-Anlage miteinander verbindet, ist es möglich, diese Anforderungen zu erfüllen. Der kritische Kreis ist an zwei Überwachungsanschlüssen am Notlichtbaustein angeschlossen. Mit dessen Versorgung 61.2, auch Überwachungskreisversorgung genannt, kann der kritische Kreis mit Strom versorgt werden. Die Versorgung 61.2 ist beispielhaft als isolierter AC-AC Wandler dargestellt. In anderen Ausführungsformen wird die Versorgung mit einem isolierten DC-DC Konverter realisiert. Mit einer isolierten Strommessung 61.1/61.4 oder Überwachungskreismessung kann der Zustand des kritischen Kreises und somit von anderen Notlichtbausteinen überprüft werden. Mit einem RelaisKontakt 61.3 oder Überwachungsschalter, welcher beispielsweise durch einen Optokoppler realisiert wird, wird der eigene Zustand des dargestellten Notlichtbausteins 1 angegeben oder übermittelt, in dem der im kritischen Kreis fliessende Strom unterbrochen werden kann, um von anderen Notlichtbausteinen der LPS-Anlage überprüft zu werden.

Lokale Anzeige 90: Um das Kalibrierungsverfahren bzw. die Bedienung des Notlichtbausteins zu vereinfachen, ist es auch möglich, verschiedene Messungen und/oder Zustände auf einem lokalen Display OLED zum Beispiel anzuzeigen. Automatische Selbsttest-Ausführung: Es kann erforderlich sein, dass eine Notbeleuchtungsanlage regelmässig überprüft wird. Mit der Steuerung 7 ist es möglich, diese Aufgabe automatisch durchzuführen, da alle Relais und Schalter vom Mikrokontroller 7 gesteuert werden können. Alle Ergebnisse und Messungen solcher Selbsttestverfahren können lokal im Notlichtbaustein 1 gespeichert oder über eine BUS-Leitung 70 bzw. drahtlos an einer zentralen Überwachungsstelle übermittelt werden.

Bei einem Selbsttest kann ein Notbetriebsverfahren vom Mikrokontroller 7 automatisch simuliert und gesteuert werden. Alle vom Notlichtbaustein 1 versorgten Notleuchten werden somit im Notbetrieb eingeschaltet. Mit deren lokalen Notlichtelementen, welche speziell auf den Notlichtbaustein 1 abgestimmt und entwickelt sind, können der Strom und somit die Leistung jeder Notleuchte geregelt werden. Dadurch kann der gesamte vom Notlichtbaustein gelieferte Ausgangsstrom im Not- bzw. Testbetrieb von allen Notleuchten gemeinsam geregelt werden. Mit der Messung 14 dieses gesamten Notlichtbausteinausgangsstroms ist es möglich, genau zu eruieren, ob alle Notleuchten im Notbetrieb richtig funktionieren oder ob eine Notleuchte fehlt bzw. fehlerhaft ist. Dafür kann ein Kalibrierungsverfahren durchgeführt werden, wie unten erläutert.

Kalibrierung über einen lokalen Schalter 80: Um den Zustand der vom Notlichtbaustein 1 versorgten Notleuchten zu überprüfen, ist es möglich, einen lokalen Schalter im Notlichtbaustein 1 einzubauen. Im Not- oder im Testbetrieb werden alle Notleuchten vom Konverter 8 versorgt. Der gesamte Strom wird mit der Messung 14 gemessen. Durch ein Kalibrierungsverfahren kann dessen Wert als Nennwert im Mikrokontroller 7 gespeichert werden. Bei jedem Testbetrieb kann der gemessene Strom 14 mit diesem Nennwert verglichen werden, um den Zustand der Notleuchten zu überprüfen.

Fernmeldung bzw. Fernsteuerung 70: Um eine LPS-Anlage aus einer zentralen Überwachungsstelle - einer zweckbestimmten Kontrolleinheit oder einem Computer - zu überwachen, wie es von der Norm einmal pro Tag vorgeschrieben wird, bzw. zu kontrollieren, ist es möglich alle Notlichtbausteine und die zentrale Kontrolleinheit mit einer BUS-Leitung 70 zu verbinden. Diese BUS-Leitung kann einem beliebigen Standard, z.B. RS485 oder Meterbus, entsprechen. Eine solche Kommunikation kann auch drahtlos erfolgen. Diese Funktionalität bleibt jedoch optional, da alle vorgeschriebenen Funktionen vom Notlichtbaustein selbständig ausgeführt werden können. Alle erforderlichen Überwachungen und Schnittstellen - wie z.B. Kinomodus und kritischer Kreis - sind auf jedem Notlichtbaustein vorhanden. Somit sind die Fernmeldung und die Fernsteuerung 70 nicht sicherheitsrelevant. Die obenerwähnte Ausführung eines Selbsttestverfahrens kann aus der zentralen Überwachungsstelle automatisch ausgelöst werden, um deren Zeitpunkt bzw. deren Regelmässigkeit genau bestimmen zu können. In diesem Fall sind jedoch die BUS-Leitung und die Kommunikation mit der zentralen Überwachungsstelle als sicherheitsrelevant zu betrachten.

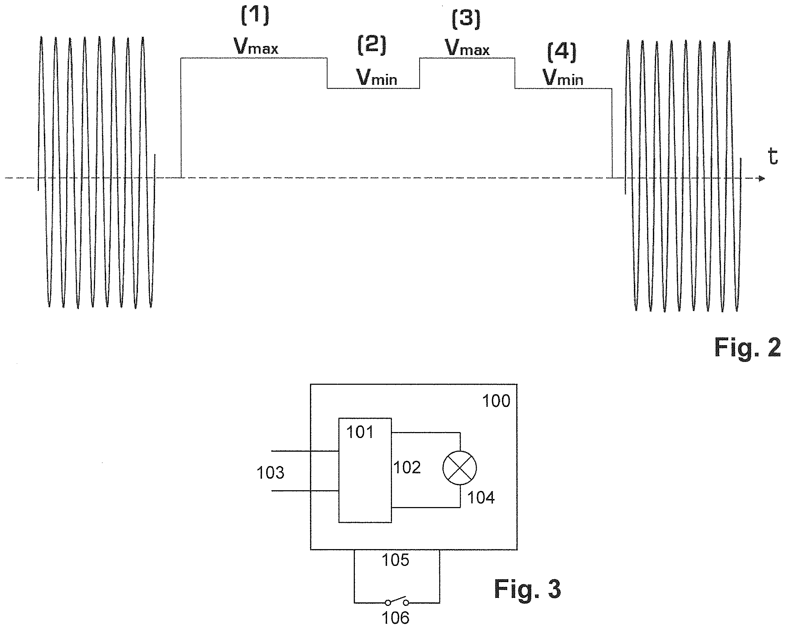

**Fig. 3** zeigt wesentliche funktionale Einheiten eines Notlichtelementes 101 zum Speisen einer Notleuchte 100. Das Notlichtelement weist einen Eingangsanschluss 103 zum Anschluss an einen Notlichtbausteinausgang 2 auf, und einen Leuchtmittelanschluss 102 zum Speisen eines Leuchtmittels 104.

Über einen optionalen lokalen Schalteranschluss 105 zum Anschluss eines lokalen Schalters 106, kann in einem netzversorgten Dauerschaltungsmodus das Leuchtmittel ein- und ausgeschaltet werden. Durch Detektieren einer Einschaltsequenz wechselt der Notlichtelement in einen eingeschalteten netzversorgten Dauerschaltungsmodus, in welchem das Leuchtmittel eingeschaltet ist, ungeachtet dessen, ob der lokale Schalter ein- oder ausgeschaltet ist.

**Umschaltverfahren vom normalen Bereitschaftsschaltungs- oder Dauerschaltungsmodus zum gedimmten akkuversorgten Notbetrieb im Fall** eines **Netzausfalles:**
Ein Netzausfall wird über die Netzüberwachungsschaltung 3.1 oder über ein Signal 12 aus dem Gleichrichter 11 detektiert.
- Die Steuerung 7 steuert die Netztrennrelais 10b und 10a zum Abtrennen des Netzes an. Danach wird eine kurze Zeit gewartet, bis die Relais-Kontakte der Netztrennrelais 10a-1 bis 10b.2 geöffnet sind.
- Der Konverter 8 wird dann über das Steuersignal 15 gesteuert, bis dessen Ausgangsspannung 13 einen gewünschten Wert, z.B. 220V DC Gleichspannung, erreicht hat bzw. auf diesem Wert geregelt wird. Es ist auch möglich, um das Umschaltverfahren zu beschleunigen, den Konverter 8 auch im normalen Bereitschaftsschaltungs- oder Dauerschaltungsmodus dauernd anzusteuern und somit deren Ausgangskondensatoren, welche die Ausgangsspannung 13 filtern, immer geladen zu halten.
- Gleichzeitig mit der Aktivierung des Steuersignals 15 des Konverters 8 oder unmittelbar danach werden die Relais 9a und 9b gesteuert, um die Relais-Kontakte 9a.1 bis 9b.2 im stromlosen Zustand zu schliessen.
- Nach einer kurzen Wartezeit, bei welcher sichergestellt wird, dass die Schliessung der Relais-Kontakte 9a.1 bis 9b.2 erfolgreich abgeschlossen ist, kann der statische Schalter 20 über das Steuersignal 20.1 eingeschaltet werden.
- Dadurch entsteht eine Gleichspannung am Notlichtbausteinsaugang 2, welche vom Konverter 8 erzeugt und von der Steuerung 7 geregelt wird. Alle vom Notlichtbaustein 1 über den Notlichtbausteinsaugang 2 versorgten Notleuchten können die gleichförmige Gestalt der Ausgangsspannung erkennen und zum Notbetrieb ein- bzw. umschalten.
- Wenn das Netz wieder vorliegt respektive in Ordnung ist, wird zuerst der Konverter 8 über dessen Steuersignal 15 abgeschaltet. Dann wird gewartet bis die Ausgangsspannung am Notlichtbausteinausgang 2 auf einem sicheren Wert gesunken ist bzw. die Ausgangskondensatoren des Konverters 8 sich genug entladen haben, um den statischen Schalter 20 über dessen Steuerung 20.1 abzuschalten.
- Unmittelbar danach werden die Relais 9a und 9b abgeschaltet bzw. deren Kontakte 9a.1 bis 9b.2 im stromlosen Zustand geöffnet. Nach einer kurzen Wartezeit, bei welcher sichergestellt wird, dass die Öffnung der Relais-Kontakte 9a.1 bis 9b.2 erfolgreich abgeschlossen ist, können die Netztrennrelais 10a und 10b wieder eingeschaltet werden, abhängig von der Betriebsart der versorgten Notleuchten.

Dieses Umschaltverfahren ist erfolgreich, wenn alle von der Ausgangsspannung am Notlichtbausteinausgang 2 versorgten Notleuchten die Gestaltung dieser Ausgangsspannung erkennen und sich darauf im gedimmten Zustand einschalten können.

Unter dem "Steuern" des Konverters 8 wird allgemein das Betreiben des Konverters 8 verstanden, und damit die Bildung seiner Ausgangsspannung 13. Der Konverter 8 kann dabei direkt durch das Steuersignal 15 getaktet respektive geschaltet werden, oder das Steuersignal 15 kann einer Sollwertvorgabe entsprechen, gemäss welcher der Konverter 8 die Ausgangsspannung regelt.

Umschaltverfahren vom Bereitschaftsschaltungs- ZB2 zum dauernd eingeschalteten netzversorgten Zustand ZB4 oder vom lokal ausgeschalteten Dauerschaltungsmodus ZD2 zum eingeschalteten netzversorgten Dauerschaltungsmodus ZD4 im Fall eines Notbetriebs bei einem anderen Stromkreis der gleichen LPS-Anlage:
Die Betriebszustände anderer Stromkreise in der gleichen LPS-Anlage können über die Überwachung eines oben-beschriebenen kritischen Kreises 61 ermittelt werden.
Alternativ ist es auch möglich, diese Betriebszustände direkt mittels Überwachung anderer Netzversorgungsspannungen 50, 51, 52, 53 zu eruieren.

Im Fall eines Notbetriebs bei einem anderen Stromkreis in der gleichen LPS-Anlage kann es erforderlich sein, alle vom Notlichtbaustein 1 versorgten Notleuchten einzuschalten und über das Netz bzw. nicht aus dem Akku zu versorgen. Dafür kann folgendes Einschaltverfahren mit einer Einschaltsequenz der Ausgangsspannung am Notlichtbausteinausgang 2 ausgeführt werden (ein beispielhafter Verlauf der Ausgangsspannung 13 des Konverters 8 während des Einschaltverfahrens ist in Fig.2 dargestellt):
- Wie bei einem Netzausfall werden zuerst die Netztrennrelais 10b und 10a abgeschaltet, Danach wird eine kurze Zeit z.B. 20ms gewartet, bis ihre Relais-Kontakte 10a-1 bis 10b.2 geöffnet sind.
- Danach wird durch den Konverter 8 die Akkuspannung 16 in eine Gleichspannung 13 umgewandelt. In einem ersten Zeitabschnitt, z.B. 300ms, wird die Ausgangsspannung 13 des Konverters 8 von der Steuerung 7 auf einem Wert geregelt, welcher höher liegt als beim reinen Netzausfall, z.B. 240V DC, in Fig.2 als Vmax angegeben.
- Im Wesentlichen gleichzeitig mit dem Steuern des Konverters 8 werden beide Relais 9a und 9b eingeschaltet.
- Nach einer kurzen Wartezeit, z.B. ca. 10ms, bzw. nach der stromlosen Schliessung aller Kontakte 9a.1 bis 9b.2 wird der statische Schalter 20 eingeschaltet und dadurch entsteht die gleichförmige Ausgangsspannung 13 des Konverters 8 am Notlichtbausteinausgang 2, typischerweise nach Abzug von Spannungsabfällen im statischen Schalter 20 und in den Relais-Kontakten 9a.1 bis 9b.2.
- Nach dem ersten Zeitabschnitt bzw. während eines zweiten Zeitabschnitts, z.B. 200ms, wird der Wert der Ausgangsspannung 13 durch den Konverter 8 auf einem anderen Wert geregelt, welcher tiefer liegt als beim reinen Netzausfall, z.B. 200V DC, in Fig.2 als Vmin angegeben.
- Nach dem zweiten Zeitabschnitt bzw. während eines dritten Zeitabschnitts, z.B. 200ms, wird der Wert der Ausgangsspannung 13 auf dem gleichen Wert geregelt wie beim ersten Zeitabschnitt, z.B. 240V DC.
- Nach dem dritten Zeitabschnitt bzw. während eines vierten Zeitabschnitts z.B. 200ms, wird der Wert der Ausgangsspannung 13 auf dem gleichen Wert geregelt wie beim zweiten Zeitabschnitt, z.B. 200V DC
- Nach dem vierten Zeitabschnitt, in diesem Beispiel also ca. 900ms nach dem Start dieses Einschaltverfahrens, bzw. innerhalb rund einer Sekunde, werden der statische Schalter 20 und kurz, ca. 5ms, danach die Relais 9a und 9b abgeschaltet.
- Nach einer kurzen Wartezeit, ca. 10ms, bzw. nach der stromlosen Öffnung aller Kontakte 9a.1 bis 9b.2 werden die Netztrennrelais 10a und 10b eingeschaltet. Dadurch liegt (wieder) die Netzspannung 3 am Notlichtbausteinausgang 2 an.

Durch dieses Verfahren ist die Ausgangsspannung am Notlichtbausteinausgang 2 zuerst, während ca. einer Sekunde, eine Gleichspannung, welche zwischen einem maximalen und einem minimalen Wert abwechselnd umschaltet, und danach die Netzspannung. Die vom Notlichtbausteinausgang 2 versorgten Notleuchten sind typischerweise in der Lage, die Einschaltsequenz zu dekodieren. Beim anfänglichen Anliegen einer gleichförmigen Spannung starten die Notleuchten den Notbetrieb. Nach der oben beschriebenen Einschaltsequenz d.h. unmittelbar nach der Entstehung der Netzspannung am Notlichtbausteinausgang 2, werden die Notleuchten vom Netz versorgt und vom Notbetriebs- zum dauernd eingeschalteten netzversorgten Zustand respektive zum eingeschalteten Dauerschaltungsmodus umschalten, egal ob die Notleuchten im Bereitschaftsschaltungs- oder im Dauerschaltungsmodus arbeiten.

Wenn normale Bedingungen wieder eintreten, d.h. wenn der kritische Kreis 61 wieder geschlossen ist bzw. wenn die überwachten Netzspannungen 50, 51, 52, 53 wieder in Ordnung sind, werden die im Bereitschaftsschaltungsmodus arbeitenden Notleuchten wieder abgeschaltet. Deren Abschaltung kann durch eine Abschaltsequenz am Notlichtbausteinausgang 2 erfolgen, ähnlich wie bei der Einschaltsequenz für deren Einschaltung. In einer Ausführungsform kann die Abschaltung durch eine kurze, z.B. 1s dauernde, Notbetriebsphase erfolgen, in dem die Ausgangsspannung während einer Sekunde auf dem Notbetriebsnennwert, z.B. 220V DC, geregelt wird.

Selbstverständlich sind andere Einschalt- bzw. Abschaltsequenzen möglich, beginnend zum Beispiel mit dem minimalen statt dem maximalen Wert. Auch können andere maximale und minimale Werte gewählt werden. Die Dauer solcher Umschaltsequenzen sollte jedoch auf einer maximale Dauer begrenzt werden, welche von den lokalen gültigen Vorschriften als maximale Zeitverzögerung für die Einschaltung einer Notleuchte angegeben wird. Zudem wird bei dieser Umschaltsequenz der Akku bzw. dessen elektrische Energie beansprucht und somit sollte die Umschaltsequenz so kurz wie möglich sein.

Um das Umschaltverfahren zu beschleunigen, ist es auch möglich, den Konverter 8 ständig im Leerlauf zu steuern, damit die Ausgangskondensatoren, welche für die Filterung der Ausgangsspannung 13 benötigt werden, immer geladen bleiben.

## Patentansprüche

1. Notlichtbaustein (1), aufweisend:
• einen Netzanschluss (3) zum Anschliessen an ein Netz zur Versorgung des Notlichtbausteins (1) mit elektrischer Energie, einen Notlichtbausteinausgang (2) zum Speisen von einer oder mehreren Notleuchten und einen Akkuanschluss zum Anschluss eines Akkus;
• ein Ladegerät (11), zum Laden eines am Akkuanschluss angeschlossenen Akkus (6) in einem Netzbetrieb des Notlichtbausteins (1);
• Mittel zum Ermitteln eines Netzzustands am Netzanschluss (3);
• einen DC-DC Konverter (8) zum Wandeln einer am Akkuanschluss anliegenden Akkuspannung (16) in eine gleichförmige Konverterausgangsspannung (13) zum Versorgen des Notlichtbausteinausgangs (2) in einem Notbetrieb, in welchem der Notlichtbaustein (1) nicht durch den Netzanschluss (3) versorgt ist;;
• Konvertertrennrelais (9a, 9b) zur galvanischen Trennung der Konverterausgangsspannung (13) vom Notlichtbausteinausgang (2);
• Netztrennrelais (10a, 10b) zur galvanischen Trennung des Netzanschlusses (3) vom Notlichtbausteinausgang (2);
• optional einen statischen Schalter (20), insbesondere einen unidirektionellen Schalter, zum Ein- und Ausschalten einer Versorgung des Notlichtbausteinausgangs (2) mit einem Ausgangsstrom (14) des Konverters (8);
• eine elektronische Steuerung (7), welche den Netzzustand überwacht, eine Umschaltung von einem Netz- zu einem Notbetrieb bzw. vom Not- zum Netzbetrieb steuert, und dazu den Konverter (8), die Konvertertrennrelais (9a, 9b) und Netztrennrelais (10a, 10b) sowie den statischen Schalter (20) steuert, und optional einen Zustand des Notlichtbausteins anzeigt;
• Mittel zum Detektieren eines externen Notzustandes als Folge eines Notbetriebes eines anderen Notlichtbausteins oder als Folge eines Fehlerzustandes einer überwachten Spannung an einem anderen Notlichtbaustein;
• **dadurch gekennzeichnet, dass** der Notlichtbaustein (1) dazu eingerichtet ist, beim Detektieren des externen Notzustandes eine Einschaltsequenz durch Variation der Ausgangsspannung am Notlichtbausteinausgang (2) zu generieren, und dabei die Einschaltsequenz mittels des DC-DC Konverters (8) zu erzeugen.

2. Notlichtbaustein (1) gemäss Anspruch 1, wobei der Notlichtbaustein (1) dazu eingerichtet ist, in einem netzversorgten Zustand
• den Notlichtbausteinausgang (2) durch den Netzanschluss (3) zu speisen;
• beim Detektieren des externen Notzustandes die Einschaltsequenz am Notlichtbausteinausgang (2) zu generieren; und anschliessend;
• den Notlichtbausteinausgang (2) wieder durch den Netzanschluss (3) zu speisen.

3. Notlichtbaustein (1) gemäss Anspruch 1 oder 2, wobei die Mittel zum Detektieren des externen Notzustandes aufweisen:
eine elektronische Schaltung (61.1, 61.2, 61.3, 61.4): zur Versorgung und Überwachung eines kritischen Kreises, mit einer Quelle (61.2) zum Anlegen einer Spannung zwischen zwei Klemmen eines Überwachungsanschlussses, einem Überwachungsschalter (61.3) zum Unterbrechen eines Stromflusses zwischen diesen Klemmen, insbesondere beim Notbetrieb des Notlichtbausteins (1), und einer Überwachungskreismessung (61.1, 61.4) zum Überwachen eines Stromflusses zwischen diesen Klemmen und zum Detektieren eines Unterbruchs dieses Stromflusses, und damit zum Detektieren des externen Notzustandes.

4. Notlichtbaustein (1) gemäss einem der Ansprüche 1 bis 3, wobei die Mittel zum Detektieren des externen Notzustandes aufweisen:
Spannungsüberwachungen (50, 51, 52, 53) zum Überwachen von anderen Spannungen, insbesondere von anderen Netzspannungen oder Netzspannungsphasen als der Netzspannung am Netzanschluss (3) des Notlichtbausteins (1).

5. Notlichtbaustein (1) gemäss einem der Ansprüche 1 bis 4, dazu eingerichtet, die Einschaltsequenz als ein von der Netzspannung verschiedenes und von der Konverterausgangsspannung (13) zum Versorgen des Notlichtbausteinausgangs (2) in einem Notbetrieb verschiedenes Spannungssignal zu erzeugen.

6. Notlichtbaustein (1) gemäss einem der Ansprüche 1 bis 5, dazu eingerichtet, die Einschaltsequenz als eine über einen zeitlichen Abschnitt vorliegende Gleichspannung zu erzeugen, wobei insbesondere deren Spannungswert sich vom Wert der Ausgangsspannung am Notlichtbausteinausgang (2) im Notbetrieb unterscheidet.

7. Notlichtbaustein (1) gemäss einem der Ansprüche 1 bis 5, dazu eingerichtet, die Einschaltsequenz als eine Reihenfolge von zwei oder mehreren zeitlichen Abschnitten mit Gleichspannungen mit unterschiedlichen Werten zu erzeugen.

8. Notlichtbaustein (1) gemäss einem der vorangehenden Ansprüche, dazu eingerichtet, die Einschaltsequenz während einer Zeit von weniger als zwei Sekunden, insbesondere weniger als einer Sekunde zu erzeugen.

9. Notlichtbaustein (1) gemäss einem der Ansprüche 6 bis 8, wobei die Gleichspannung respektive Gleichspannungen der Einschaltsequenz zwischen 200 V und 240 V DC liegen.

10. Notlichtbaustein (1) gemäss einem der Ansprüche 1 bis 5, dazu eingerichtet, die Einschaltsequenz als eine hochfrequente AC-Spannung, mit einer Frequenz höher als die Netzfrequenz, beispielsweise höher als 1 kHz, zu erzeugen.

11. Notlichtbaustein (1) gemäss einem der vorangehenden Ansprüche, wobei der Notlichtbaustein (1) dazu eingerichtet ist, in einem netzversorgten Zustand
• den Notlichtbausteinausgang (2) durch den Netzanschluss (3) zu speisen;
• beim Wegfallen des externen Notzustandes eine **Ausschaltsequenz** am Notlichtbausteinausgang (2) zu generieren; und anschliessend;
• den Notlichtbausteinausgang (2) wieder durch den Netzanschluss (3) zu speisen.

12. **Notbeleuchtungsanlage, dadurch gekennzeichnet, dass** sie zwei oder mehr Notlichtbausteine (1) gemäss einem der vorangehenden Ansprüche aufweist, wobei die Überwachungs-anschlüsse der Notlichtbausteine (1) miteinander verbunden sind und eine geschlossene Schleife bilden.

13. **Notlichtelement** (101) zum Speisen einer Notleuchte (100), aufweisend einen Eingangsanschluss (103) zur Versorgung des Notlichtelements (101), insbesondere durch Anschliessen an einen Notlichtbausteinausgang (2) eines Notlichtbausteins (1), und einen Leuchtmittelanschluss (102) zum Speisen eines Leuchtmittels (104),
wobei das Notlichtelement (101) dazu eingerichtet ist, beim Anliegen einer Gleichspannung am Eingangsanschluss (103) das Leuchtmittel in einem Notbetrieb mit einer Notbetriebsleistung zu speisen;
**dadurch gekennzeichnet, dass** das Notlichtelement dazu eingerichtet ist, beim Detektieren einer am Eingangsanschluss (103) anliegenden Einschaltsequenz und bei einer anschliessend am Eingangsanschluss (103) liegenden Netzspannung, eine Umschaltung des Notlichtelements (101)
• zu einem Zustand, in welchem der Leuchtmittelanschluss (102) zum Speisen des Leuchtmittels (104) mit einer Nennleistung gespeist ist und dabei von der am Eingangsanschluss (103) anliegenden Netzspannung versorgt ist,
vorzunehmen.

14. Notlichtelement (101) gemäss Anspruch 13, dazu eingerichtet, beim Detektieren der Einschaltsequenz die genannte Umschaltung der Notleuchte (100) vorzunehmen,
• falls die Notleuchte (100) durch einen lokalen Schalter (106) ein- und ausschaltbar ist, und in einem vom lokalen Schalter (106) hervorgerufenen ausgeschalteten Zustand ist.

15. Notlichtelement (101) gemäss einem der Ansprüche 13 bis 14, dazu eingerichtet, die Einschaltsequenz
• als ein von der Netzspannung verschiedenes und von der Konverterausgangsspannung (13) zum Versorgen des Notlichtbausteinausgangs (2) in einem Notbetrieb verschiedenes Spannungssignal zu detektieren, insbesondere
• als eine über einen zeitlichen Abschnitt vorliegende Gleichspannung zu detektieren, wobei insbesondere deren Spannungswert sich vom Wert der Ausgangsspannung am Notlichtbausteinausgang (2) im Notbetrieb unterscheidet,
• oder als eine Reihenfolge von zwei oder mehreren zeitlichen Abschnitten mit Gleichspannungen mit unterschiedlichen Werten zu detektieren.
